# EUROPEAN PATENT APPLICATION

(11) **EP 4 070 901 A1**
(43) Date of publication of application: **12.10.2022**
(21) Application number: 20895820.7
(22) Date of filing: 04.08.2020
(51) Int. Cl.: B23D 45/16, B23D 47/00

(54) **CUTTING TOOL**

(30) Priority: 06.12.2019 CN 201922178356 U
(71) Applicant: Positec Power Tools (Suzhou) Co., Ltd., Suzhou, Jiangsu 215123 (CN)
(72) Inventor: WU, Hongbing, Suzhou, Jiangsu 215123 (CN); JI, Shaoshan, Suzhou, Jiangsu 215123 (CN); MA, Yichun, Suzhou, Jiangsu 215123 (CN); MENG, Rui, Suzhou, Jiangsu 215123 (CN); MA, Jianying, Suzhou, Jiangsu 215123 (CN)
(74) Representative: ABG Intellectual Property Law, S.L.
(86) International application number: PCT/CN2020/106748
(87) International publication number: WO 2021/109603

(57) **Abstract**

A cutting tool, comprising an output shaft, a brushless motor, a fan, a transmission device, a circuit board, and a housing. The housing comprises a first housing and a second housing; the first housing has a first end and a second end in the extension direction of the first housing; the first end is configured to connect to the second housing, and the second end is configured to connect to a power supply device; the second housing accommodates the motor and the transmission device; the first housing is further provided with a handle portion; when a user grasps the handle portion to cut, a saw blade is located at the left side of the first housing; moreover, when the fan rotates, the motor and the circuit board are both arranged in the passage of a cooling airflow. Compared with the prior art, by means of reasonable structure design and the use of a high-speed motor, the provided cutting tool achieves the technical effects of being high in efficiency and good in heat dissipation.

## Description

### CROSS-REFERENCE TO RELATED APPLICATIONS

This application claims priority to Chinese Patent Application No. 201922178356.5, filed on December 6, 2019, the disclosures are hereby incorporated by reference in their entireties.

### TECHNICAL FIELD

The embodiments of the present disclosure relate to a cutting tool, and in particular, to an electric circular saw.

### BACKGROUND

In recent years, for the sake of size and high efficiency, new layout methods for hand-held electric circular saws have been researched. The layout includes the following structure: a main housing including a first housing and a second housing. The first housing extends longitudinally and includes a first end for connecting to the second housing and a second end for connecting to a power supply device. In addition, a middle position of the first housing is constructed as a handle for a user to hold. A motor and a transmission mechanism are accommodated in the second housing.

Different from a conventional layout of arranging the motor on the handle, this layout may not be limited by the size of the motor. The radial size of the handle is designed within an appropriate range, which is convenient to hold. However, still using a conventional brushed motor, such an electric circular saw has a large-sized motor and low cutting efficiency. Moreover, electric circular saws with a brushless motor generally adopt a D-shaped handle layout, resulting in a large-sized whole machine structure and poor portability. Moreover, the output heat of the brushless motor may substantially increase.

### SUMMARY

The embodiments of the present disclosure provide an electric circular saw to resolve the technical problems of low cutting efficiency and poor heat dissipation by designing an appropriate structure and using a brushless motor.

To resolve the above technical problems, the embodiments of the present disclosure provides a cutting tool, including an output shaft, configured to install a saw blade; a motor, configured to drive the output shaft to rotate, the motor is a brushless motor and includes a motor shaft; a fan, driven by the motor shaft, and configured to generate a cooling airflow; a transmission device, arranged between the output shaft and the motor shaft, and configured to transmit the power of the motor to the output shaft, the motor shaft is parallel to the output shaft; a base plate, provided with a saw blade through hole for the saw blade to pass through; and a housing, including a first housing and a second housing, the first housing includes a first end and a second end, the first end is configured to connect to the second housing, and the second end is configured to connect to a power supply device, the second housing accommodates the motor and the transmission device, and the housing is rotatably connected to the base plate by a pivot axis parallel to the output shaft for adjusting a cutting depth; and a circuit board, accommodated in the housing, the first housing is further provided with a handle portion for a user to grasp, and when the user grasps the handle portion to cut, the saw blade is located at a left side of the first housing, and in a case that the fan rotates, the circuit board and the motor are both arranged in a passage of the cooling airflow.

In a possible implementation, the circuit board is arranged inside the first end of the first housing.

In a possible implementation, the fan is arranged on an end of the motor shaft close to the saw blade; the housing is provided with cooling air holes, and the cooling air holes include a first air inlet and a first air outlet; the first air inlet is provided on the second housing, and located at a side of the second housing opposite to the saw blade; the first air outlet is provided on the second housing, and located at a radially outer side of the fan; and when the fan rotates, the cooling airflow includes a first cooling airflow entering the housing from the first air inlet and then flowing out of the housing from the first air outlet, the first cooling airflow dissipates heat from the motor.

In a possible implementation, the cooling air holes further include a second air inlet, the second air inlet is provided on the first housing, and located between the circuit board and a saw blade plane; a first rib plate assembly is arranged inside the housing; when the fan rotates, under the guidance of the first rib plate assembly, the cooling airflow further includes a second cooling airflow entering the housing from the second air inlet and then flowing out of the housing from the first air outlet; and the second cooling airflow dissipates heat from the circuit board.

In a possible implementation, the cooling air holes further include a second air outlet, the second air outlet is provided on the first housing, and located between the circuit board and the saw blade plane; a second rib plate assembly is arranged inside the housing; when the fan rotates, under the guidance of the second rib plate assembly, the cooling airflow further includes a second cooling airflow entering the housing from the first air inlet and then flowing out of the housing from the second air outlet; and the second cooling airflow flows through the motor and the circuit board in sequence.

In a possible implementation, the fan is arranged at an end of the motor shaft away from the saw blade; the housing is provided with cooling air holes, and the cooling air holes include a first air inlet and a first air outlet; the first air inlet is provided on the first housing, and located between the circuit board and a saw blade plane; the first air outlet is provided on the second housing, and located at a radially outer side of the fan; and a second rib plate assembly is also arranged inside the housing; and when the fan rotates, under the guidance of the second rib plate assembly, the cooling airflow further includes a first cooling airflow formed in the housing, the first cooling airflow enters the housing from the first air inlet, then flows through the circuit board and the motor in sequence, and finally flows out of the housing from the first air outlet.

In a possible implementation, the cooling air holes further include a second air inlet, the second air inlet is provided on the second housing, and the second air inlet is located between the motor and the transmission device along a direction parallel to the motor shaft; when the fan rotates, under the guidance of the second rib plate assembly, the cooling airflow further includes a second cooling airflow formed in the housing; and the second cooling airflow enters the housing from the second air inlet, flows through the motor, and then flows out of the housing from the first air outlet.

In a possible implementation, the circuit board is arranged inside the second end of the first housing, and the fan is arranged at an end of the motor shaft close to the saw blade; the cooling air holes include a first air inlet, a first air outlet, and a second air outlet; the first air inlet is provided on an end portion of the second housing away from the saw blade; the first air outlet is provided on the second housing, and located at a radially outer side of the fan; and the second air outlet is provided on the first housing, and is arranged close to the circuit board.

In a possible implementation, the circuit board is arranged between the pivot axis and the handle portion.

In a possible implementation, a radial circumference of the handle portion is in a range of 130 mm to 150 mm.

In a possible implementation, the first housing extends along a first axis, and the first axis is perpendicular to an axis of the motor shaft.

In a possible implementation, the transmission device uses one-stage transmission, and includes a driving gear supported on the motor shaft and a driven gear supported on the output shaft; and a transmission ratio of the one-stage transmission is in a range of 2 to 6.5, and a quantity of teeth of the driven gear is in a range of 12 to 35.

In a possible implementation, a diameter of the saw blade mounted to the output shaft is in a range of 110 mm to 130 mm, the cutting depth of the cutting tool is not less than 38 mm.

In a possible implementation, a depth setting rail is arranged on the base plate, a circle center of the depth setting rail is located on the pivot axis, and the depth setting rail and the saw blade are respectively located at both sides of the first housing.

To resolve the above technical problems, the embodiments of the present disclosure further provide a cutting tool, including an output shaft, configured to install a saw blade; a motor, configured to drive the output shaft to rotate, the motor is a brushless motor and includes a motor shaft; a transmission device, arranged between the output shaft and the motor shaft, and configured to transmit the power of the motor to the output shaft, the motor shaft is parallel to the output shaft; a base plate, provided with a saw blade through hole for the saw blade to pass through; and a housing, including a first housing and a second housing, the first housing includes a first end and a second end, the first end is configured to connect to the second housing, and the second end is configured to connect to a power supply device, and the second housing accommodates the motor and the transmission device, the first housing is further provided with a handle portion for a user to grasp, and when the user grasps the handle portion to cut, the saw blade is located at a left side of the first housing.

The cutting tool according to the present embodiments include a first housing and a second housing. The first housing includes a first end for connecting to the second housing and a second end for connecting to a power supply device. A brushless motor and a transmission device are accommodated inside the second housing. Moreover, when a fan rotates, the motor and a circuit board are both arranged in a passage of a cooling airflow. The cutting tool of the present embodiments can achieve the technical effects of high efficiency and good heat dissipation by appropriately arranging the layout and adopting the brushless motor.

### BRIEF DESCRIPTION OF THE DRAWINGS

The embodiments of the present disclosure are further described below with reference to the accompanying drawings and implementations.
FIG. 1 is a perspective view of a cutting tool according to a first implementation of the present invention;
FIG. 2 is a front view of the cutting tool shown in FIG. 1, in which the cutting tool is in a maximum cutting depth state;
FIG. 3 is a rear view of the cutting tool shown in FIG. 1;
FIG. 4 is a top view of the cutting tool shown in FIG. 1;
FIG. 5 is a front view of the cutting tool shown in FIG. 1, in which the cutting tool is in a minimum cutting depth state;
FIG. 6 is a schematic structural diagram of the cutting tool shown in FIG. 1, which shows the cutting tool can be effectively supported by a base plate when cutting a workpiece, wherein the movable cover is in a retracted state;
FIG. 7 is a schematic structural diagram of the cutting tool shown in FIG. 1, which shows the cutting tool can be effectively supported by a base plate when the cutting tool is at rest, wherein the saw blade is removed, and the movable cover is in a retracted state;
FIG. 8 is a front view of the cutting tool shown in FIG. 1, wherein the base plate is extended;
FIG. 9 is a right view of the cutting tool shown in FIG. 1 with a main portion shown in cross section, where a first housing is removed;
FIG. 10 is a structural diagram of the cutting tool shown in FIG. 3, where the right half housing is removed;
FIG. 11 is a perspective view of the cutting tool shown in FIG. 1 from another view, in which the cutting tool is in a minimum cutting depth state;
FIG. 12 is a top view for describing a cooling airflow according to a first implementation with a main portion shown in cross section;
FIG. 13 is a top view for describing a cooling airflow according to a second implementation with a main portion shown in cross section
FIG. 14 is a top view for describing a cooling airflow according to a third implementation with a main portion shown in cross section;
FIG. 15 is a top view for describing a cooling airflow according to a fourth implementation with a main portion shown in cross section;
FIG. 16 is a rear view of a cutting tool according to a fifth implementation of the present invention;
FIG. 17 is a structural diagram of the cutting tool shown in FIG. 16 after removing the right half housing;
FIG. 18 is a top view for describing a cooling airflow according to a fifth implementation with a main portion shown in cross section;
FIG. 19 is a top view for describing a cooling airflow according to a sixth implementation with a main portion shown in cross section;
FIG. 20 is a front view of a cutting tool according to a seventh implementation of the present invention;
FIG. 21 is a rear view of the cutting tool shown in FIG. 20;
FIG. 22 is a structural diagram of the cutting tool shown in FIG. 21 after removing the right half housing, where a circuit board is arranged inside a second end of the first housing;
FIG. 23 is a top view for describing a cooling airflow according to a seventh implementation with a main portion shown in cross section;
FIG. 24 is a top view for describing a cooling airflow according to an eighth implementation with a main portion shown in cross section; and
FIG. 25 is a top view for describing a cooling airflow according to a ninth implementation with a main portion shown in cross section

### DETAILED DESCRIPTION

Exemplary implementations of the present disclosure are described below with reference to the accompanying drawings. It should be understood that the detailed descriptions are merely intended to teach a person skilled in the art to implement the present embodiments, but are not intended to exhaust all possible implementations of the present invention and are not intended to limit the scope of the present embodiments.

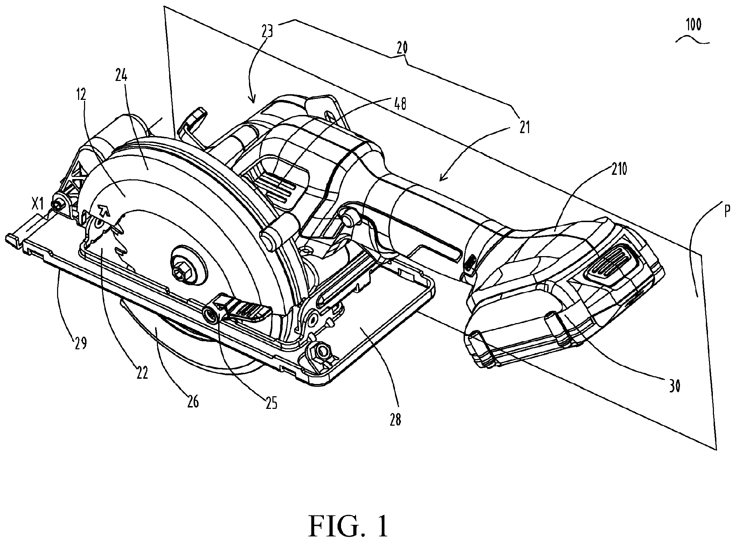

As shown in FIG. 1 to FIG. 12, a first implementation of the present invention provides a cutting tool 100, particularly, an electric circular saw, including: an output shaft 14, configured to install a saw blade 12; a motor, configured to drive an output shaft 14 to rotate, the motor includes a motor shaft; a transmission device, arranged between the output shaft 14 and the motor shaft and configured to transmit a movement of the motor to the output shaft 14; a housing 20, configured to accommodate parts such as the motor or the transmission device; a cover component, attached to the housing 20, and including a stationary cover 24 configured to cover an upper half portion of the saw blade 12 and a movable cover 26 that is rotatable relative to the stationary cover 24; and a base plate 28, movably connected to the housing 20 by the stationary cover 24, a bottom surface 29 configured to come into contact with a workpiece is formed on the base plate 28, the base plate 28 is provided with a saw blade through hole 22, the saw blade 12 can pass through the through hole 22 and protrude downward from the bottom surface 29 of the base plate.

In descriptions of the present embodiments, unless otherwise noted, directional terms, such as front, rear, left, right, up, and down, are directions relative to a direction in which the cutting tool 100 is normally used. For example, a forward direction of the cutting tool 100 is defined as the front, and a direction opposite to the forward direction of the cutting tool 100 is defined as the rear.

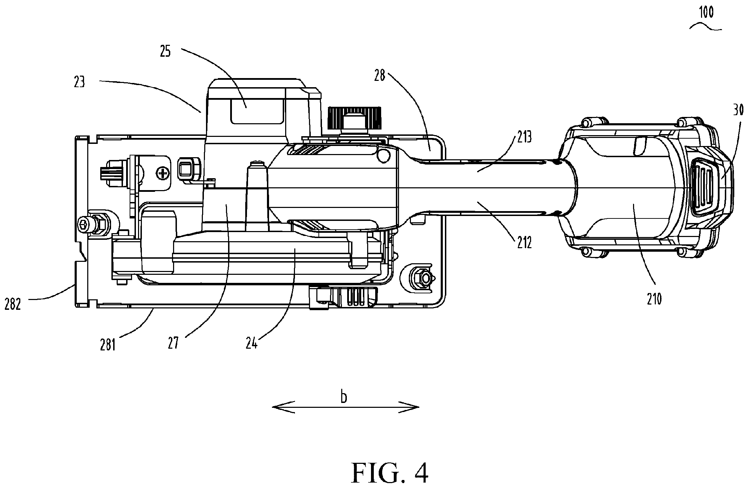

As shown in FIG. 1 and FIG. 4, the housing 20 includes a first housing 21 and a second housing 23 connected to the first housing 21.

The first housing 21 is symmetrically arranged with respect to a first plane P. A plane on which the saw blade 12 is located is defined as a saw blade plane. The first plane P is parallel to the saw blade plane. The first housing 21 extends along a longitudinal direction, and includes a first end and a second end respectively located in extending directions thereof. The extending direction of the first housing 21 is defined as a direction of a first axis X.

The first end of the first housing 21 close to the output shaft 14 is connected to the second housing 23. The second end of the first housing 21 away from the output shaft 14 is connected to a power supply device 30. The power supply device 30 is configured to provide power for the cutting tool 100. Specifically, a joint portion 210 is arranged at the second end of the first housing 21. The joint portion 210 is configured to connect to the power supply device 30.

In this implementation, the power supply device 30 is a battery pack. The joint portion 210 is configured to detachably connect to the battery pack 30.

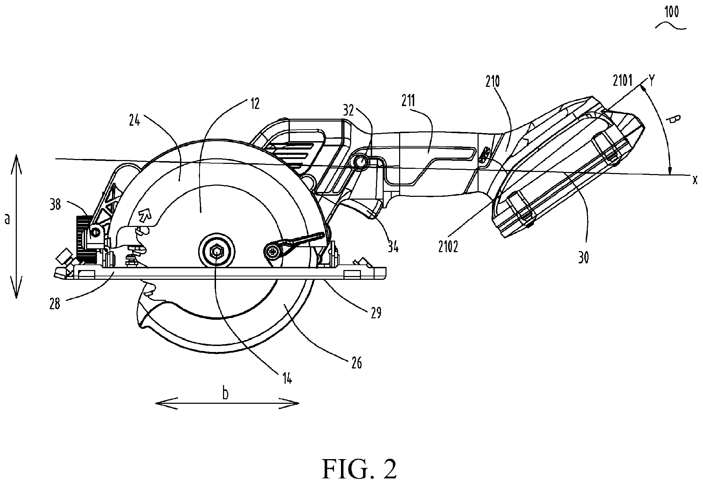

A middle position of the first housing 21 is constructed as a handle portion 211, which is convenient for a user to hold when the user uses the cutting tool 100 to perform a cutting operation. As shown in FIG. 2, a safety switch 32 and a power switch 34 are arranged near the handle portion 211. The power switch 34 is configured to switch on or off the motor. Moreover, the power switch 34 can be triggered only when the safety switch 32 is pressed. In other words, two operations may need to be performed before the motor can be started. As a result, the danger caused by a single operation is avoided. When the user holds the handle portion 211, the hand with which the user holds the handle portion 211 can trigger the safety switch 32 and the power switch 34 to switch on or off the cutting tool 100.

A circuit board is further arranged inside the first housing 21. A driving circuit and a control circuit are either or both mounted on the circuit board. The driving circuit includes a switch element. The switch element is configured to be triggered by the power switch 34 for switching power supplied to the motor. The control circuit is configured to drive the driving circuit.

In this implementation, the first housing 21 is assembled from a left half housing 212 and a right half housing 213 that are symmetrical with respect to the first plane P by screws. In addition, the left half housing 212 is fixedly connected to the stationary cover 24 by screws.

In a possible implementation, the first housing 21 may also be formed integrally. "Integrally" should be particularly understood as being at least cohesively connected, for example, by using a welding process, a gluing process, an injection process, and/or other processes considered as meaningful by a person skilled in the art and/or advantageously understood as shaped in one piece, for example, by casting a casting and/or by using a one-component or multi-component process injection molding, and preferably manufactured by a single blank.

In a possible implementation, the first housing 21 and the second housing 23 may also be integrally formed.

As shown in FIG. 1 and FIG. 4, the second housing 23 is arranged at the first end in the extending direction of the first housing 21, and is substantially cylindrical, and accommodates the motor and the transmission device therein. An axis of the motor shaft is parallel to an axis of the output shaft, and perpendicular to the saw blade plane. The axis of the motor shaft is also perpendicular to the first axis X direction of the first housing 21.

In this implementation, the second housing 23 is assembled from a motor storage portion 25 and a deceleration box 27 by screws. The motor 16 is accommodated in the motor storage portion 25. The transmission device is accommodated in the deceleration box 27. The stationary cover 24, the deceleration box 27, and the motor storage portion 25 are arranged in sequence along an axial direction parallel to the motor shaft, and the three are fixedly connected by screws.

Referring to FIG. 1 and FIG. 2, the cover component adopts a conventional design in the prior art, includes a stationary cover 24 with an arc-shaped structure and a movable cover 26 that can rotate relative to the stationary cover 24. The stationary cover 24 is located at the left side of the deceleration box 27.

In this implementation, the stationary cover 24 is fixedly connected to the deceleration box 27. The movable cover 26 is sheathed in the stationary cover 24 and can rotate around the axis of the output shaft 14 to be received into the stationary cover 24. The output shaft 14 extends into the stationary cover 24. The saw blade 12 is detachably connected to the output shaft 14. In actual work, different types of saw blades 12 may be used according to the material of a to-be-cut object. The saw blade 12 is arranged in the stationary cover 24. Almost an upper half of an outer circumference of the saw blade is covered by the stationary cover 24. The movable cover 26 can rotate in the stationary cover 24 to cover or expose a lower half of the saw blade 12. There is a movable cover opener 25 between the movable cover 26 and the stationary cover 24. Referring to FIG. 1, when using the cutting tool 100, an operator manually pushes the opener 25 to rotate the movable cover 26 to expose some saw teeth.

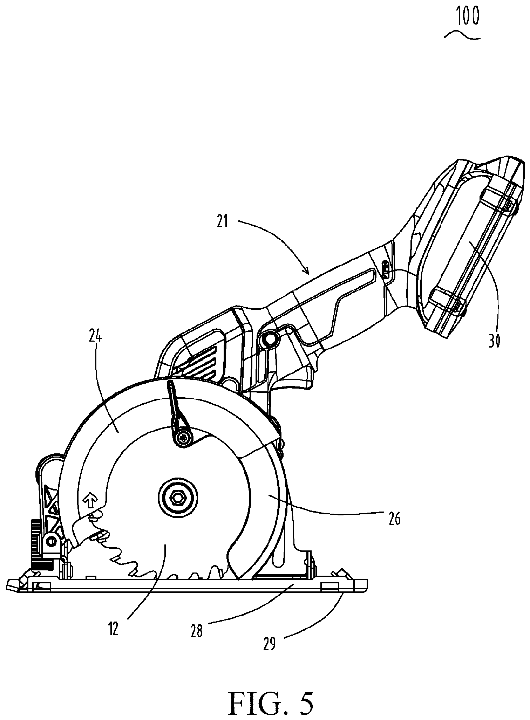

The base plate 28 is movably connected to the stationary cover 24. Specifically, a connection seat 38 is arranged at a front side of the base plate 28. The connection seat 38 is connected to the stationary cover 24 by a pin, so that the stationary cover 24 can rotate relative to the base plate 28. Here, the axis of the pin is defined as a pivot axis X1. The pivot axis X1 is parallel to the axis of the motor shaft. When the stationary cover 24 rotates around the pivot axis X1 relative to the base plate 28, relative position between the stationary cover 24 and the base plate 28 can change, so that the cutting tool 100 has different cutting depth, as shown in FIG. 2 and FIG. 5. The force applied to the handle portion 211 can cause the handle portion 211 to rotate relative to the base plate 28, thereby driving the stationary cover 24 to rotate relative to the base plate 28.

The cutting depth of the cutting tool 100 is defined as a distance that the saw blade 12 protrudes from the bottom surface 29. When the handle portion 211 drives the stationary cover 24 to rotate to a position at which the saw blade 12 protrudes from the bottom surface 29 by a maximum distance, the cutting tool 100 is at a maximum cutting depth position, and the cutting depth in this case is a maximum cutting depth, as shown in FIG. 2. When the handle portion 211 drives the stationary cover 24 to rotate to a position at which the saw blade 12 protrudes from the bottom surface 29 by a minimum distance, the cutting tool 100 is at a minimum cutting depth position, and the cutting depth in this case is a minimum cutting depth, as shown in FIG. 5.

The cutting tool 100 further includes a depth setting adjustment mechanism and a depth setting locking mechanism. The depth setting adjustment mechanism includes a longitudinally extending depth setting rail 31 arranged on one of the base plate 28 and the housing 20, and a depth setting slider 33 arranged on the other one of the base plate 28 and the housing 20. The depth setting slider 33 matches the depth setting rail 31. The depth setting rail 31 may be an arc-shaped guide rail. The center of the arc of the guide rail is located on the pivot axis X1. Certainly, an extending direction of the depth setting rail 31 may also be substantially perpendicular to the bottom surface 29. The slide of the depth setting slider 33 along the depth setting rail 31 can adjust the distance that the saw blade 12 protrudes from the bottom surface 29, thereby adjust the cutting depth of the saw blade 12. The extending direction of the depth setting rail 31 substantially perpendicular to the bottom surface 29 does not need extend along a straight line provided that there is a longitudinal extending direction substantially perpendicular to the bottom surface 29.

The depth setting locking mechanism may maintain the depth setting slider 33 at a specific position relative to the slide rail 31, so that the saw blade 12 may maintain a specific distance protruding from the bottom surface 29, thereby cutting a groove with a specific depth on the workpiece. The depth setting locking mechanism may be a conventional structure such as a thread locking mechanism or a cam locking mechanism, which is not described herein in detail.

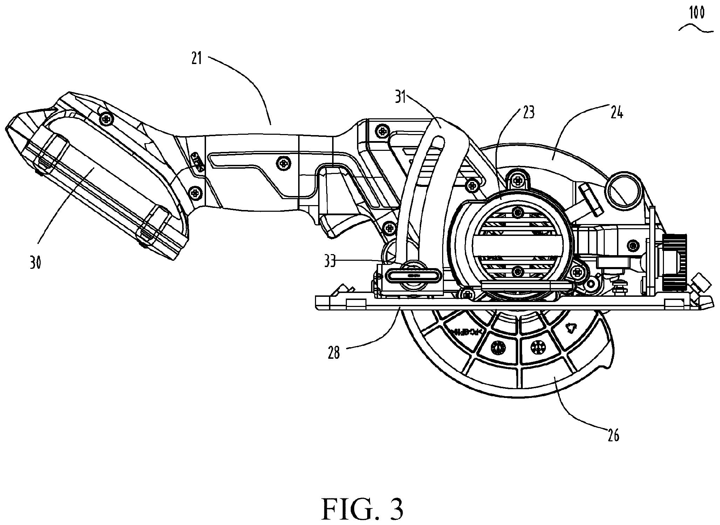

In this implementation, as shown in FIG. 3, the depth setting adjustment mechanism and the depth setting locking mechanism are arranged at a side of the right half housing 213. The depth setting rail 31 is fixed on the base plate 28. The depth setting rail 31 is located on the right side of the first housing 21 in a cutting travel direction of the cutting tool. The depth setting slider 33 is fixed on the first housing 21.

In this implementation, the second housing 23 is distributed on two sides of the first plane P, and the joint portion 210 is also symmetrically arranged with respect to the first plane P, so that a center of gravity of the entire cutting tool 100 is arranged closer to the first plane P along a direction perpendicular to the first plane P. Therefore, the center of gravity of the entire cutting tool 100 can be closer to a middle position of the handle portion 211, Thus, the cutting tool 100 has better stability and less vibration when user using the cutting tool 100.

In a possible implementation, the deceleration box 27 and the motor storage portion 25 may also be integrally arranged on the second housing 23.

To ensure the stability of the cutting tool 100 during the cutting operation, and to avoid applying a control force parallel to the direction of the motor shaft to the cutting tool 100 when a user applies a forward force to the cutting tool 100. A projection of the center of gravity of the cutting tool 100 in the present embodiment falls on the base plate 28.

Referring to FIG. 2 and FIG. 4, the projection of the center of gravity of the cutting tool 100 falls on the base plate 28 in a direction (a direction indicated by an arrow a in FIG. 2) perpendicular to the bottom surface 29.

In this implementation, the base plate 28 is a rectangular base plate. A length direction of the base plate is the cutting travel direction (a direction indicated by an arrow b in FIG. 2) of the cutting tool 100. A width direction of the base plate is perpendicular to the cutting travel direction of the cutting tool 100. In detail, the base plate 28 includes a long side edge 281 extending along the cutting travel direction of the cutting tool 100 and a short side edge 282 perpendicular to the long side edge 281. The long side edge 281 includes a left side edge and a right side edge that are arranged opposite to each other. The short side edge 282 includes a front side edge and a rear side edge that are arranged opposite to each other. The front side edge is arranged forward. The rear side edge is arranged rearward. Certainly, in other embodiments, the base plate 28 may be in other shapes. For example, the base plate is a circular base plate.

In a direction perpendicular to the bottom surface 29, the projection of the center of gravity of the cutting tool 100 is designed to fall on the base plate 28, so that the center of gravity of the cutting tool 100 is arranged forward. Therefore, when being placed horizontally on a work surface by using the base plate 28, the cutting tool 100 can be effectively supported by the base plate 28. In this case, the user does not need to apply a force parallel to the direction of the motor shaft to the cutting tool 100 to prevent the cutting tool 100 from toppling, thereby improving the user experience. It should be noted that the cutting tool 100 described herein refers to a cutting tool 100 without the battery pack 30 connected.

Referring to FIG. 1 to FIG. 4, in conventional designs, in an entire weight of the cutting tool 100, the second housing 23 accommodating the motor and the transmission device occupies the largest weight ratio. Therefore, a main objective of arranging the center of gravity of the cutting tool 100 is how to arrange the motor and a deceleration device.

In this implementation, a projection of the deceleration box 27 is designed to fall on the base plate 28 in the direction perpendicular to the bottom surface 29. A projection of the motor storage portion 25 is designed to at least partially fall on the base plate 28. In this way, the projection of the center of gravity of the cutting tool 100 can fall on the base plate 28.

In this implementation, the cutting tool 100 is powered by a battery pack 30. A connection manner (including an electrical connection and a mechanical connection) between the joint portion 210 and the battery pack 30 is a common connection means in the prior art, which is not described herein in detail. It should be noted that when the cutting tool 100 is connected to the battery pack 30 by the joint portion 210, the projection of the center of gravity of the cutting tool 100 still falls on the base plate 28 in the direction perpendicular to the bottom surface 29.

Certainly, in another implementation, the cutting tool 100 may also be powered in other manners, for example, be electrically connected to the mains by a cable plug arranged on the cutting tool 100 or by an adapter.

In addition, when the cutting tool 100 is not powered by the battery pack 30 or when the cutting tool 100 does not have the battery pack 30 mounted, in the direction perpendicular to the bottom surface 29, the projection of the center of gravity of the cutting tool 100 is designed to fall on the base plate 28, so that the center of gravity of the cutting tool 100 is arranged forward. Therefore, when the cutting tool 100 is placed horizontally on the work surface by using the base plate 28, regardless of whether the cutting tool 100 is in use or at rest, and regardless of the cutting depth of the cutting tool 100, the cutting tool 100 can be effectively supported by the base plate 28, and can be stably placed on the work surface without toppling, which improves the user experience.

When the cutting tool 100 is powered by the battery pack 30, similarly, in the direction perpendicular to the bottom surface 29, the projection of the center of gravity of the cutting tool 100 is designed to fall on the base plate 28, so that when the cutting tool 100 is placed horizontally on the work surface by using the base plate 28, regardless of whether the cutting tool 100 is in use or at rest, and regardless of the cutting depth of the cutting tool 100, the cutting tool 100 can be effectively supported by the base plate 28 and can be stably placed on the work surface.

When the cutting tool 100 is powered by the battery pack 30, to enable the cutting tool 100 to be effectively supported by the base plate 28, there is a specific positional relationship between the battery pack 30 and the longitudinally extending axis X of the first housing 21. Referring to FIG. 2, in this implementation, the battery pack 30 is slidably connected to the joint portion 210. The joint portion 210 defines a removal axis Y. The joint portion 210 includes a first portion 2101 at one end of the removal axis Y and a second portion 2102 at an other end of the removal axis Y. The second portion 2102 is closer to the output shaft 14 than the first portion 2101. In other words, a lower end of the joint portion 210 is closer to the output shaft 14. In this way, after the battery pack 30 is mounted on the joint portion 210, a center of gravity of the battery pack 30 is arranged further forward, which is beneficial to the balance of the cutting tool 100. A direction of the removal axis Y defined by the joint portion 210 is a sliding direction of the battery pack 30.

Referring to FIG. 2, an angle β is formed by the first axis X in the longitudinally extending direction of the first housing 21 and the sliding direction Y of the battery pack 30. The angle β ranges from 15° to 90°. In addition, when β is 90°, and the sliding direction Y of the battery pack 30 is perpendicular to the extending direction of the handle portion 211, the center of gravity of the battery pack 30 is further forward, so that the center of gravity of the cutting tool 100 is further forward, and stability of the cutting tool 100 is better.

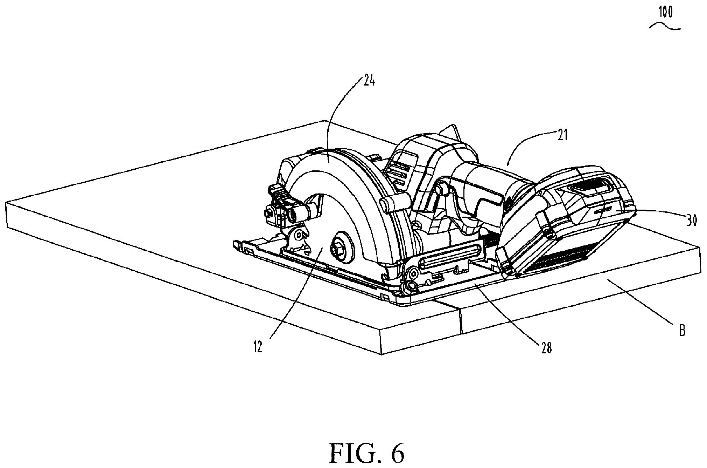

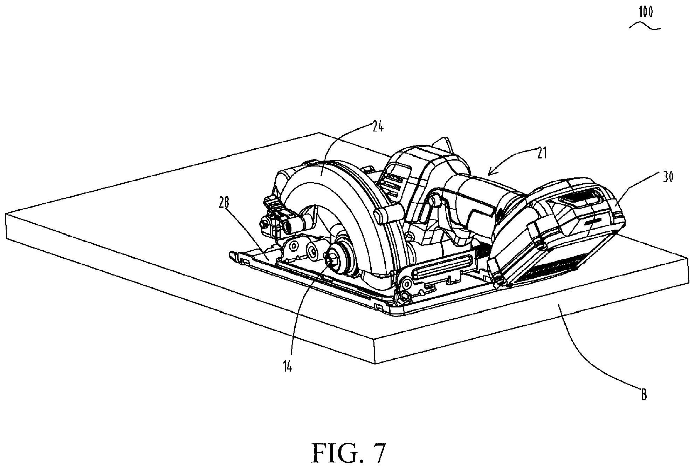

Referring to FIG. 6 and FIG. 7, it is described below that when the cutting tool 100 is placed on a work surface B, the base plate 28 can effectively support the cutting tool 100 by designing the projection of the center of gravity of the cutting tool 100 to fall on the base plate 28.

A possible case is that the cutting tool 100 can be effectively supported by the base plate 28 during the cutting operation. Referring to FIG. 6, during cutting, the base plate 28 is placed on the work surface B, and the bottom surface 29 thereof comes into contact with the work surface B. The work surface B can be a to-be-cut object or a guide member placed above the to-be-cut object. One of the objectives of the base plate 28 is to come into contact with the work surface B to stabilize the cutting, and another objective is to stabilize the whole machine and prevent toppling.

Another possible case is that, when resting on the base plate 28, the cutting tool 100 can be effectively supported by the base plate 28 without toppling. In this case, the saw blade 12 has been removed, and the movable cover 26 is accommodated in the stationary cover 24. Referring to FIG. 7, before cutting, the saw blade 12 is not mounted on the cutting tool 100, and the cutting tool 100 is placed on the work surface B by using the base plate 28. In this case, the work surface B may be a storage surface of a rack for placing the cutting tool 100. In this case, the cutting tool 100 is not affected by other external force except for its own gravity and a supporting force of the work surface B to the cutting tool 100. The cutting tool 100 can be effectively supported by the base plate 28 without toppling.

In the foregoing implementations, a size of the base plate 28 is a conventional size, and the center of gravity of the cutting tool 100 is changed by appropriately arranging the second housing 23 accommodating the transmission device and the motor.

In a possible implementation, the cutting tool 100 may be effectively supported by increasing the size of the base plate 28. Certainly, it does not mean that the larger the size of the base plate 28 the better. The size of the base plate 28 needs to be designed within an appropriate range based on the consideration of the operability.

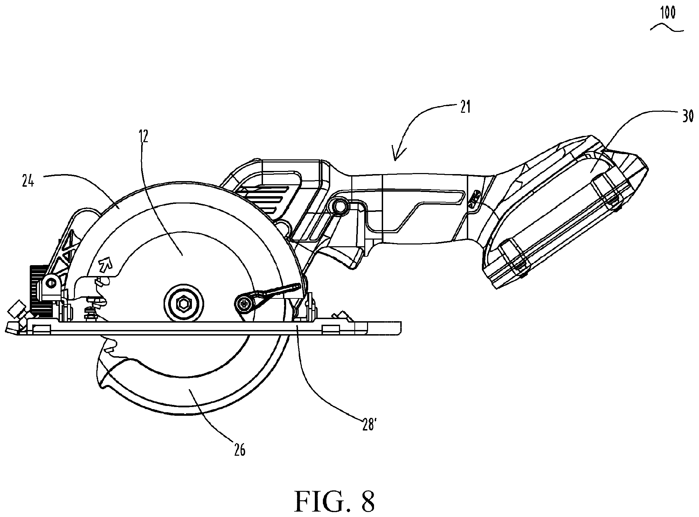

As shown in FIG. 8, a dashed line portion of a base plate 28' is an increased portion relative to an existing base plate 28 of a regular size. The size of the base plate 28' may be selected according to a saw blade 12 that is used. Specifically, when a saw blade 12 with a diameter ranging from 80 mm to 90 mm is assembled, a preferred length range of the base plate 28' is from 150 mm to 220 mm, and may be broadened to 280 mm. Moreover, when a saw blade 12 with a diameter ranging from 110 mm to 130 mm is assembled, a preferred length range of the base plate 28' is from 190 mm to 245 mm, and may be broadened to 300 mm.

In actual use, because the base plate 28' of the cutting tool 100 is a detachable structure, when different types of saw blades 12 are assembled, base plates 28' of different sizes can be selected for replacement.

In this implementation, the transmission device is a single-stage transmission, and has a transmission ratio ranging from 2 to 6.5.

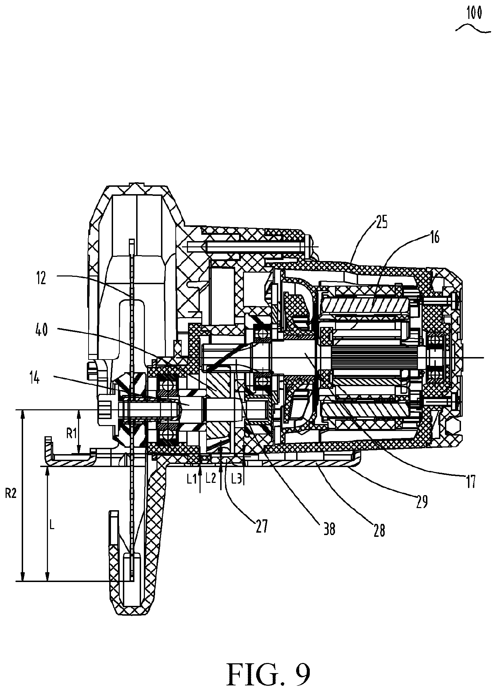

As shown in FIG. 9, the transmission device includes a driving gear 38 supported on the motor shaft 17 and a driven gear 40 supported on the output shaft 14. The driving gear 38 moves synchronously with the motor shaft 17. The output shaft 14 moves synchronously with the driven gear 40. When the motor 16 rotates, the driving gear 38 drives the driven gear 40 to rotate, thereby driving the saw blade 12 mounted on the output shaft 14 to rotate to cut the workpiece.

In a possible implementation, the driving gear 38 is integrally arranged at an end of the motor shaft 17. The driven gear 40 is fixedly connected to the output shaft 14. For example, the driven gear 40 is connected to the output shaft 14 through a key connection.

As described above, the cutting depth of the cutting tool 100 is the distance that the saw blade 12 protrudes from the bottom surface 29. In other words, in a cutting process performed by the cutting tool 100, only a portion of the saw blade 12 passing through the through hole 22 can implement a cutting function.

Referring to FIG. 9, when the handle portion 211 is rotated to allow the saw blade 12 to protrude a maximum distance from the bottom surface 29, the cutting tool 100 is at a position of a maximum cutting depth. The maximum cutting depth L may be expressed as: L=R2-R1-L1-L2-L3, where R2 represents a radius of the saw blade 12, R1 represents a radius of an addendum circle of the driven gear 40, L1 represents a distance from an outer wall of the deceleration box 27 to the bottom surface 29 along a direction perpendicular to the bottom surface 29, L2 represents a wall thickness of the deceleration box 27 along the direction perpendicular to the bottom surface 29, and L3 represents a distance from a lowest point of the driven gear 40 to an inner wall of the deceleration box 27 along the direction perpendicular to the bottom surface 29.

It should be noted that the cutting tools 100 of different specifications slightly differ from each other in sizes of L1, L2 and L3. In other words, factors that can actually affect the maximum cutting depth of the cutting tool 100 may be a diameter of the saw blade 12 and a diameter of the addendum circle of the driven gear 40.

Therefore, for the same cutting tool 100, the larger the diameter of the saw blade 12 mounted thereon, the larger the maximum cutting depth thereof. For cutting tools 100 of different specifications with the same saw blade 12 mounted, the smaller the diameter of the addendum circle of the driven gear 40 thereof, the larger the maximum cutting depth thereof.

It should be noted that the cutting tools 100 with different specifications described herein all refer to the cutting tool 100 using the single-stage gear transmission.

To increase the maximum cutting depth of the cutting tool 100 and improve the cutting efficiency thereof, when the transmission device of the cutting tool 100 is designed, relevant parameters may be appropriately selected, starting from the size of the addendum circle of the driven gear 40.

Specifically, a rotating speed of the saw blade 12 may affect cutting quality and cutting efficiency of the cutting tool 100. In an example in which the cutting tool 100 is used for sawing wood, the higher the rotating speed of the saw blade 12, the higher the sawing quality, and the higher the sawing efficiency. However, because saw teeth of the saw blades 12 are connected to the saw blade body by using a welding process, an excessive rotating speed may cause the saw teeth to be thrown away from the saw blade body. Moreover, an excessive rotating speed also represents a specific danger. Therefore, it is necessary to choose an appropriate rotating speed range to bring a win-win case of good cutting quality and operational safety. In this implementation, the rotating speed of the saw blade 12 of the cutting tool 100 ranges from 4,500 rpm to 6,500 rpm. Moreover, the rotating speed of the motor 16 conventionally applied to the cutting tool 100, particularly, the electric circular saw, is in a range of 10,000 rpm to 35,000 rpm. Therefore, it is determined that a transmission ratio of the cutting tool 100 is in a range of 2 to 6.5.

In this implementation, the transmission ratio may be expressed as a ratio between the rotating speed of the motor 16 and the rotating speed of the saw blade 12, or may be expressed as a gear ratio between the driven gear 40 and the driving gear 36 in a single-stage transmission device. Moreover, a quantity of teeth of the driving gear 38 applied to the cutting tool 100 is relatively fixed. For example, in the existing electric circular saw, the quantity of teeth of the driving gear 38 rotatably supported on the motor shaft 17 ranges from 5 to 8. Therefore, the quantity of teeth of the driven gear 40 in this implementation may be roughly estimated, and the quantity of teeth of the driven gear ranges from 12 to 35.

It is known that a diameter d of the addendum circle of the gear may be expressed as: d=m^{∗}z, where m represents a modulus of the gear, and z represents a quantity of teeth of the gear. The modulus of the gear is positively related to the strength of the gear teeth and the service life of the gear. In other words, the greater the modulus of the gear, the higher the strength of the gear teeth, and the longer the service life of the gear meshing transmission. However, according to another aspect, as the modulus of the gear increases, the diameter of the gear also increases, which does not help to increase the maximum cutting depth of the cutting tool 100. To this end, both the service life of the gear and the maximum cutting depth of the cutting tool need to be considered for selecting the modulus of the gear appropriately.

In a possible implementation, the motor 16 is an inner rotor motor, and a rotating speed of the inner rotor motor is in a range of 20,000 rpm to 35,000 rpm. Correspondingly, the cutting tool 100 using the inner rotor motor has a transmission ratio ranging from 3 to 6.5. Preferably, the transmission ratio is in a range of 4 to 5.

In a possible implementation, the motor 16 is an outer rotor motor, and a rotating speed of the outer rotor motor is in a range of 10,000 rpm to 15,000 rpm. Correspondingly, the cutting tool 100 using the outer rotor motor has a transmission ratio ranging from 2 to 3. Preferably, the transmission ratio is in a range of 2 to 2.5.

Therefore, the transmission ratio of the cutting tool 100 in this implementation is in a range of 2 to 6.5. The quantity of teeth of the driven gear 40 ranges from 12 to 35. When the saw blade 12 with a diameter of 110 mm to 130 mm is assembled, the maximum cutting depth of the cutting tool 100 is greater than 38 mm.

Different from a conventional cutting tool in which the motor 16 is accommodated in the handle portion 211, in this implementation, the motor storage portion 25 for accommodating the motor 16 is arranged independently of the handle portion 211. In this way, a size of the handle portion 211 may not be limited by the size of the motor 16, and can be designed within an appropriate range to implement a good holding experience. In addition, a motor with relatively high power may also be chosen according to an actual cutting requirement.

In this implementation, a radial circumference of the handle portion 211 is about 140 mm, which is smaller than a radial size of the first end and the second end of the first housing 21. The motor is a brushless motor.

The brushless motor 16 has a higher output power than that of a brushed motor under the same structural size. However, at the same time, the heat generated by the brushless motor 16 also increases. Moreover, the heat generated by the circuit board configured to control power supplied to the motor 16 also increases. To this end, a cooling device is further arranged on the cutting tool 100.

The cooling device includes a cooling fan 42 and a cooling fin 44. The cooling fan 42 is driven by the motor shaft 17 to generate a cooling airflow. A cooling rib is formed on the cooling fin 44 for guiding a flow direction of the cooling airflow.

The cooling fan 42 is fixedly mounted on the motor shaft 17. When the motor 16 starts, the cooling fan 42 rotates synchronously to generate the cooling airflow.

The cooling fin 44 is fixedly connected to the circuit board. The heat generated by the circuit board is conducted to the cooling fin according to the principle of heat conduction, and then the cooling fin 44 is cooled by the cooling airflow, so that the heat of the circuit board is dissipated. To enhance heat dissipation effect of the cooling fin 44, the cooling fin 44 is designed as a plate-shaped structure to maximize a contact area with the circuit board.

To generate the cooling airflow, the cutting tool 100 also needs to be provided with cooling air holes. In the present invention, the positions at which the cooling air holes are arranged need to allow the cooling airflow to flow through at least the circuit board and the motor 16, thereby dissipating heat from the circuit board and the motor 16. In other words, the circuit board and the motor 16 need to be arranged in a circulation channel of the cooling airflow. In this way, when the motor 16 starts, and the cooling fan 42 rotates, outside air can flow into an interior of the cutting tool 100 through the cooling air holes to form the cooling airflow. Moreover, in a process of flowing to the cooling fan 42, the cooling airflow flows through at least the circuit board and the motor 16, and finally flows out through the cooling air holes.

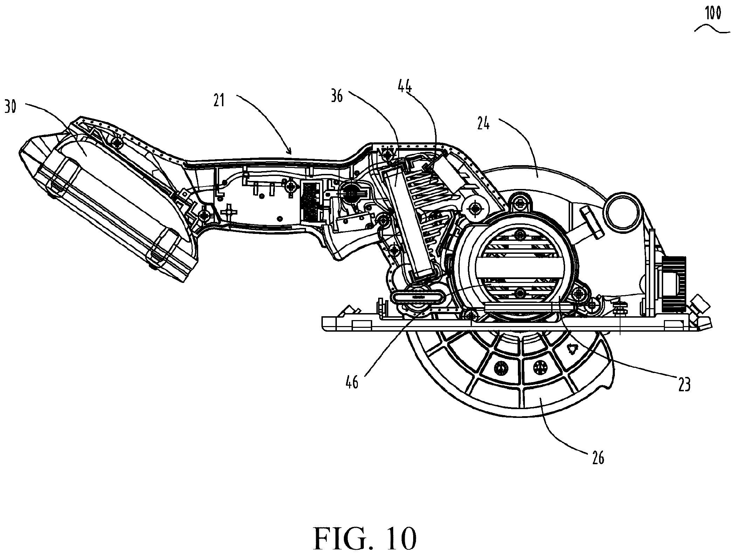

Referring to FIG. 10 to FIG. 12, a heat dissipation scheme of the cutting tool 100 in the first implementation will be described below.

In this implementation, the circuit board 36 is arranged inside the first end of the first housing 21. The cooling fan 42 is arranged at an end of the motor shaft 17 close to the saw blade 12. Further, the plane passing through the motor shaft and perpendicular to the saw blade plane is defined as a reference plane. The circuit board 36 is located at a side of the reference plane close to the second end and does not intersect with the reference plane.

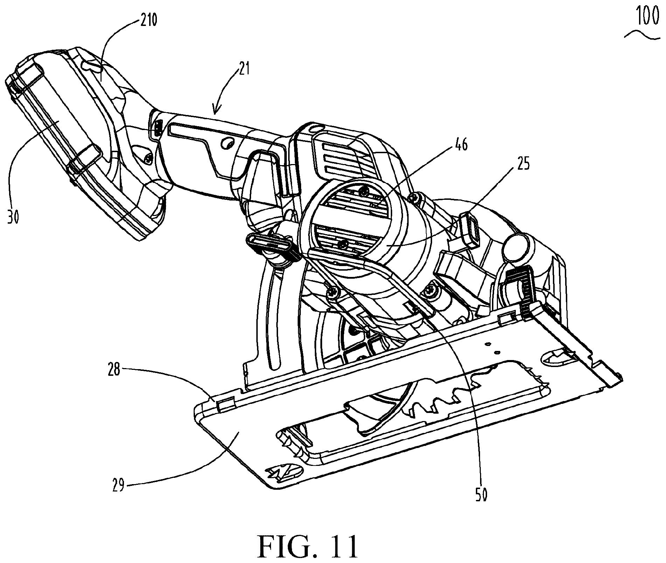

When the motor 16 starts, in order to generate the cooling airflow capable of dissipating heat from the motor 16 and the circuit board 36, the housing 20 is further provided with cooling air holes. The cooling air holes communicate the inside and the outside of the housing 20, and include a first air inlet 46 as shown in FIG. 10, a second air inlet 48 as shown in FIG. 1 and a first air outlet 50 as shown in FIG. 11.

Specifically, the first air inlet 46 is provided on an end surface of the second housing 23 opposite to the saw blade 12. In other words, the first air inlet 46 is provided on the end surface of the second housing 23 away from the saw blade 12. The second air inlet 48 is provided on the left half housing 212, and located between the saw blade plane and the circuit board 36. The first air outlet 50 is provided on the second housing 23 and is located at a radially outer side of the fan 42.

Since the circuit board 36 is arranged at the radially outer side of the fan 42, a cooling airflow that enters from the second air inlet 48 and that flows through the circuit board 36 is generated by effectively using a negative pressure generated by rotation of the cooling fan 42 inside an air guide ring 52.

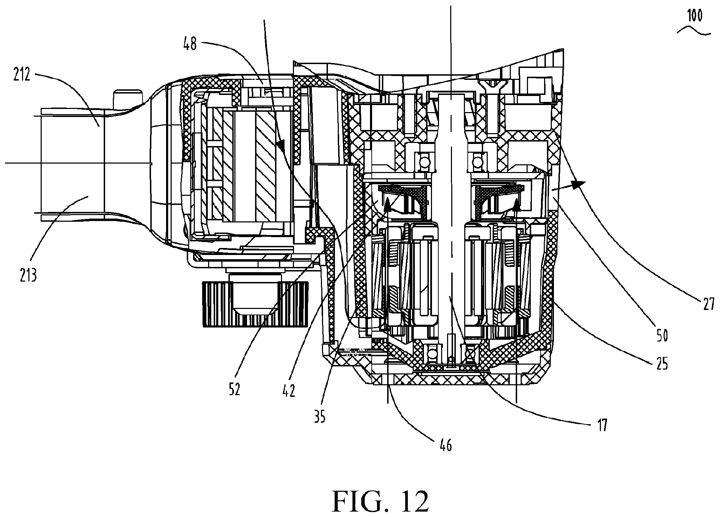

A first rib plate assembly is also arranged inside the housing 20 for guiding flowing of the cooling airflow inside the housing 20. Specifically, as shown in FIG. 12, the first rib plate assembly mainly includes a first rib plate 35 arranged in the second housing 23. The cooling airflow flows in a space defined by the first rib plate 35 and an inner wall of the second housing 23.

As shown in FIG. 3 and FIG. 12, in a cutting operation, when the bottom surface 29 abuts against a to-be-cut workpiece, the power switch 34 is normally triggered, the motor 16 starts, and the saw blade 12 rotates, thereby cutting the to-be-cut workpiece. At the same time, the cooling fan 42 rotates to form a negative pressure, to drive outside air into the cutting tool 100 to dissipate heat.

Specifically, when the cooling fan 42 rotates, under the guidance of the first rib plate assembly, the cooling airflow includes a first cooling airflow and a second cooling airflow. The first cooling airflow enters the housing 20 from the first air inlet 46, first flows through the motor 16, and flows out of the housing 20 from the first air outlet 50. The second cooling airflow enters the housing 20 from the second air inlet 48, flows through the circuit board 36 and the motor 16 in sequence, and finally flows out from the first air outlet 50.

In this implementation, under the guidance of the first rib plate assembly, the second cooling airflow first flows through the circuit board 36 and the cooling fin 44 to dissipate heat from the circuit board 36 and the cooling fin 44. Then the second cooling airflow is guided to an end portion of the second housing 23 away from the saw blade 12, and converges with the first cooling airflow entering the cutting tool 100 through the first air inlet 46, to together flow through a space defined by a rotor and a stator of the motor 16, thereby dissipating heat from the motor 16. Therefore, in the cutting tool 100 in this implementation, more airflows can be provided to dissipate heat from the motor 16, and the heat dissipation for the motor 16 is more sufficient.

Further, as shown in FIG. 10, the cooling fin 44 includes several sheet-shaped ribs. When the circuit board 36 is arranged in the housing 20, to reduce the flow resistance of the cooling airflow and optimize the cooling effect, an extending direction of a space defined by adjacent sheet-shaped ribs follows the flow direction of the cooling airflow.

With the different mounting positions of the circuit board 36 and the cooling fan 42, the heat dissipation solution of the cutting tool in the present embodiments may also change.

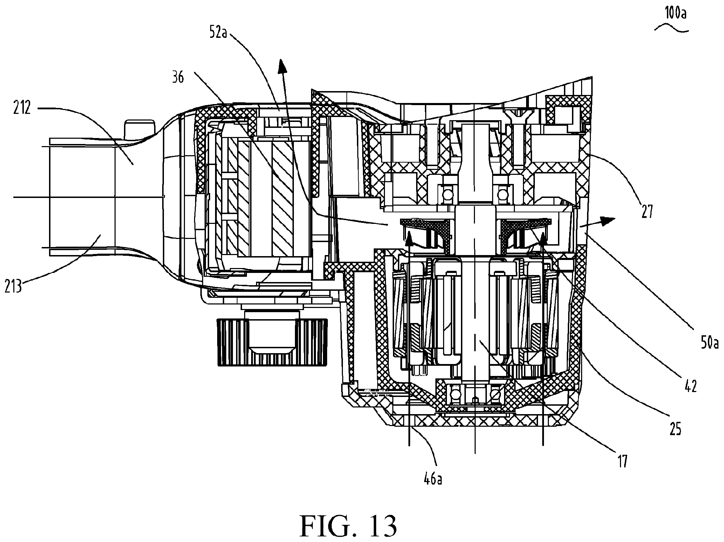

As shown in FIG. 13, the structure of a cutting tool 100a provided in a second implementation of the present invention is basically the same as that of the cutting tool 100 provided in the first implementation except that the rib plate assembly that guides the airflow is arranged differently. Specifically, in the cutting tool 100a in this implementation, a second rib plate assembly is formed inside a housing 20.

In this implementation, how the cutting tool 100a dissipates heat, functions of cooling air holes, and formation of a cooling airflow are roughly described below.

As shown in FIG. 13, as in the first implementation, in this implementation, a cooling fan 42 is arranged at an end of a motor shaft 17 close to a saw blade 12. A circuit board 36 is arranged inside a first end of the first housing 21, and located at a side of the foregoing reference plane. The cooling air holes include a first air inlet 46a, a first air outlet 50a, and a second air outlet 52a. The first air inlet 46a is arranged on an end surface of a second housing 23 opposite to the saw blade 12. The first air outlet 50a is arranged on the second housing 23, and located at a radially outer side of the fan 42. The second air outlet 52a is provided on a left half housing 212, and located between a saw blade plane and the circuit board 36.

When a motor 16 starts, the cooling fan 42 rotates to form a negative pressure, which drives outside air into the housing 20. Similar to the first implementation, the cooling airflow includes a first cooling airflow entering the housing 20 from the first air inlet 46a and flowing out from the first air outlet 50a. The first cooling airflow dissipates heat from the motor 16.

Different from the first implementation, under the guidance of a second rib plate assembly, when the cooling fan 42 rotates, the cooling airflow further includes a second cooling airflow entering the housing 20 from the first air inlet 46a and flowing out of the housing 20 from the second air outlet 52a. The second cooling airflow first flows through the motor 16 to dissipate heat from the motor 16, then flows through the circuit board 36 to dissipate heat from the circuit board 36, and finally flows out from the second air outlet 52a.

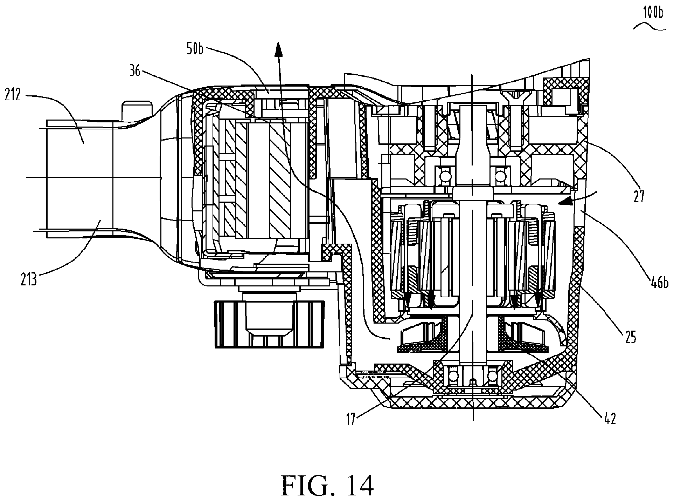

As shown in FIG. 14, the structure of a cutting tool 100b provided in a third implementation of the present invention is basically the same as that of the cutting tool 100 provided in the first implementation except that the cooling fan 42 is mounted at a different position. Specifically, the cooling fan 42 is arranged at an end of the motor shaft 17 away from the saw blade 12.

In this implementation, how the cutting tool 100b dissipates heat, respective functions of the cooling air holes, and formation of the cooling airflow are roughly described below.

As shown in FIG. 14, in this implementation, the cooling air holes include a first air inlet 46b and a first air outlet 50b. The first air inlet 46b is provided on a second housing 23. The first air inlet 46b is located between a motor 16 and a transmission device along a direction parallel to a motor shaft 17. The first air outlet 50b is provided on a left half housing 212, and located between a saw blade plane and a circuit board 36.

When the motor 16 starts, the cooling fan 42 rotates to form a negative pressure, which drives outside air into the housing 20. Under the guidance of a first rib plate assembly, the cooling airflow includes a first cooling airflow entering the housing 20 from the first air inlet 46b and flowing out of the housing 20 from the first air outlet 50b. The first cooling airflow first flows through the motor 16 to dissipate heat from the motor 16, and then flows through the circuit board 36 to dissipate heat from the circuit board 36.

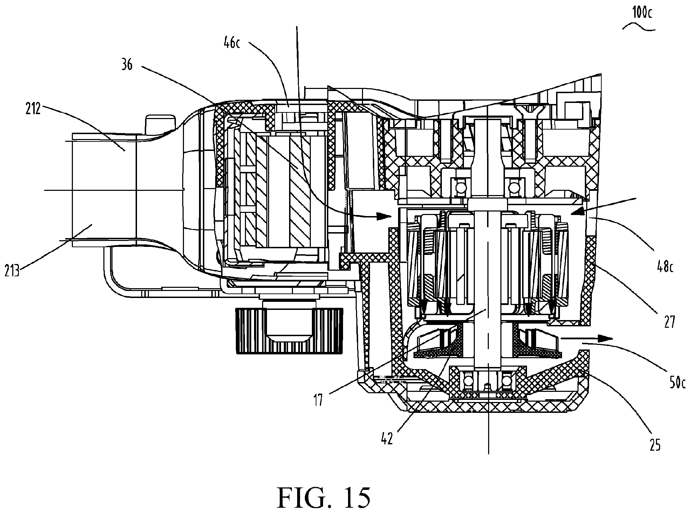

As shown in FIG. 15, the structure of a cutting tool 100c provided in a fourth implementation of the present invention is basically the same as that of the cutting tool 100 provided in the first implementation except that the cooling fan 42 and the rib plate assembly are arranged differently. Specifically, the cooling fan 42 is arranged at an end of the motor shaft 17 away from the saw blade 12. Moreover, the foregoing second rib plate assembly is formed inside the housing 20.

In this implementation, how the cutting tool 100c dissipates heat, respective functions of the cooling air holes, and formation of the cooling airflow are roughly described below.

As shown in FIG. 15, cooling air holes include a first air inlet 46c, a second air inlet 48c, and a first air outlet 50c. The first air inlet 46c is provided on a left half housing 212, and located between a saw blade plane and a circuit board 36. The second air inlet 48c is provided on a second housing 23. The second air inlet 48c is located between a motor 16 and a transmission device along a direction parallel to a motor shaft 17. The first air outlet 50c is provided on the second housing 23, and located at a radially outer side of a cooling fan 42.

When a motor 16 starts, the cooling fan 42 rotates to drive outside air into the housing 20. The cooling airflow includes a first cooling airflow entering the housing 20 from the first air inlet 46c and flowing out of the housing 20 from the first air outlet 50c and a second cooling airflow flowing into the housing 20 from the second air inlet 48c and flowing out of the housing 20 from the first air outlet 50c. The first cooling airflow flows through the circuit board 36 and the motor 16 in sequence, to dissipate heat from the circuit board 36 and the motor 16.

In the foregoing implementations, a position of the circuit board 36 is the same. In other words, the circuit boards 36 are all arranged inside a first end of the first housing 21, and is located at a side of a reference plane close to a second end.

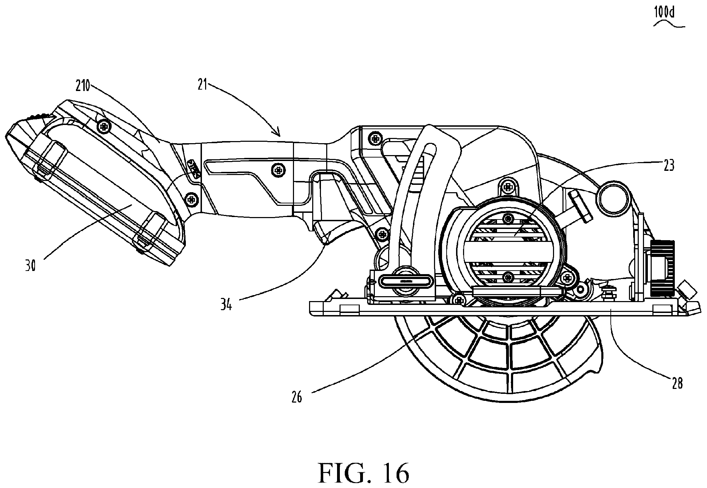

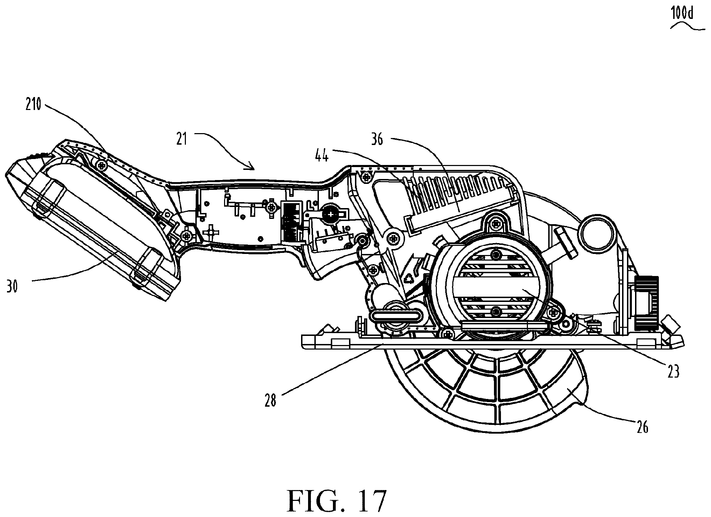

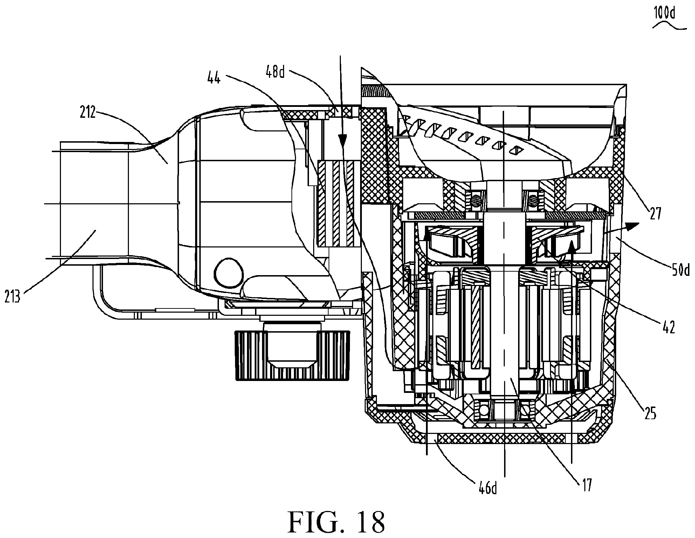

In a possible implementation, the circuit board 36 may also be arranged in another position of the housing 20. As shown in FIG. 16 to FIG. 19, the circuit board 36 may be arranged inside the first end of the first housing 21, and passes through the foregoing reference plane. In other words, the circuit board 36 may intersect the reference plane.

FIG. 16 to FIG. 18 show a cutting tool 100d of a fifth implementation of the present invention. In this implementation, a circuit board 36 is arranged inside a first end of a first housing 21 and passes through the foregoing reference plane. Moreover, a cooling fan 42 is arranged at an end of a motor shaft 17 close to a saw blade 12. The foregoing first rib plate assembly is formed inside the housing 20.

Similar to the first implementation, in this implementation, cooling air holes include a first air inlet 46d, a second air inlet 48d, and a first air outlet 50d. Specifically, the first air inlet 46d is provided on an end surface of the second housing 23 opposite to the saw blade 12. The second air inlet 48d is provided on a left half housing 212, and located between the saw blade plane and the circuit board 36. The first air outlet 50d is provided on the second housing 23, and located at a radially outer side of the cooling fan 42.

In this implementation, how the cutting tool 100d dissipates heat, respective functions of the cooling air holes, and formation of the cooling airflow are roughly described below.

When a motor 16 starts, the cooling fan 42 rotates to drive outside air into the housing 20. Under guidance of the first rib plate assembly, the cooling airflow includes a first cooling airflow and a second cooling airflow. The first cooling airflow enters the housing 20 from the first air inlet 46d, and after flowing through the motor 16, flows out of the housing 20 from the first air outlet 50d. The second cooling airflow enters the housing 20 from the second air inlet 48d, flows through the circuit board 36 and the motor 16 in sequence, and finally flows out from the first air outlet 50d.

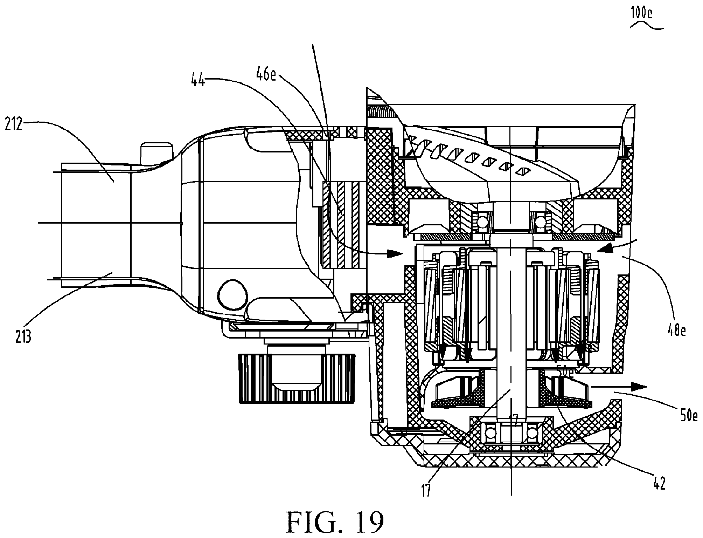

As shown in FIG. 19, the structure of a cutting tool 100e provided in a sixth implementation of the present invention is basically the same as that of the cutting tool 100d provided in the fifth implementation except that the cooling fan 42 and the rib plate assembly are arranged differently. Specifically, a cooling fan 42 is arranged at an end of a motor shaft 17 away from a saw blade 12. A second rib plate assembly is formed inside a housing 20.

To form a cooling airflow for cooling a circuit board 36 and a motor 16, cooling air holes are provided on the housing 20. The cooling air holes include a first air inlet 46e, a second air inlet 48e, and a first air outlet 50e. The first air inlet 46e is provided on a left half housing 212, and is located between a saw blade plane and a circuit board 36. The second air inlet 48e is provided on a second housing 23. The second air inlet 48e is located between the motor 16 and a transmission device along a direction parallel to a motor shaft 17. The first air outlet 50e is provided on the second housing 23, and located at a radially outer side of the fan 42.

In this implementation, how the cutting tool 100e dissipates heat, respective functions of the cooling air holes, and formation of the cooling airflow are roughly described below.

When the motor 16 starts, the cooling fan 42 rotates to drive outside air into the housing 20. The cooling airflow includes a first cooling airflow entering the housing 20 from the first air inlet 46e and flowing out of the housing 20 from the first air outlet 50e, and a second cooling airflow flowing into the housing 20 from the second air inlet 48e and flowing out of the housing 20 from the first air outlet 50e.

Similarly, the first cooling airflow first flows through the circuit board 36 to dissipate heat from the circuit board 36, then flows through the motor 16 to dissipate heat from the motor 16, and finally flows out from the first air outlet 50e.

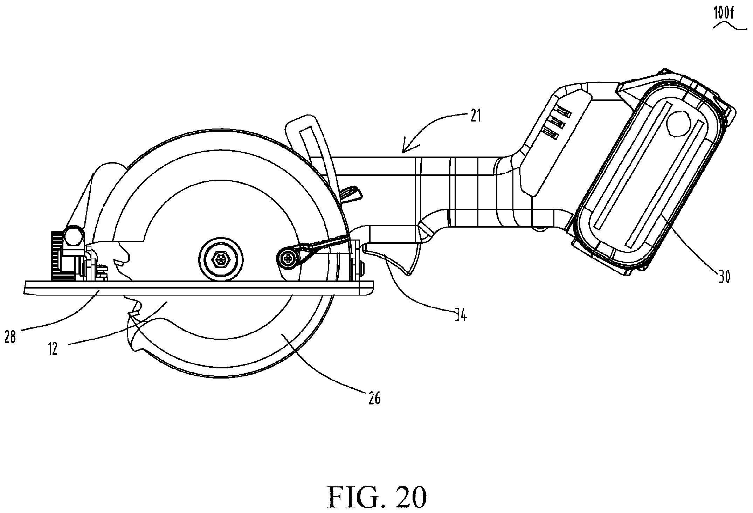

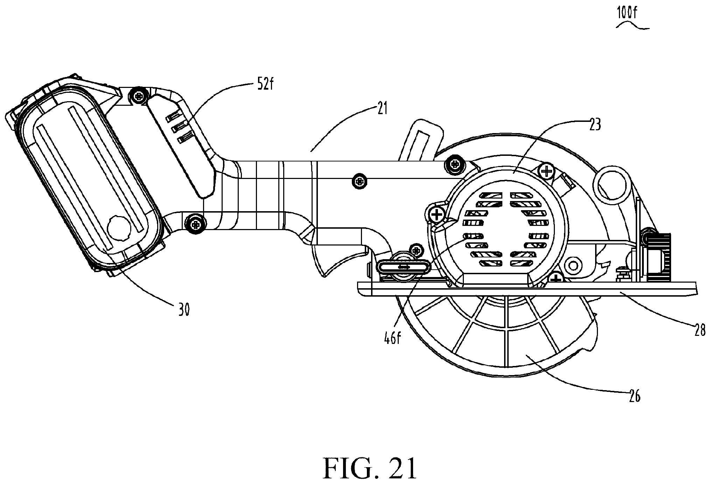

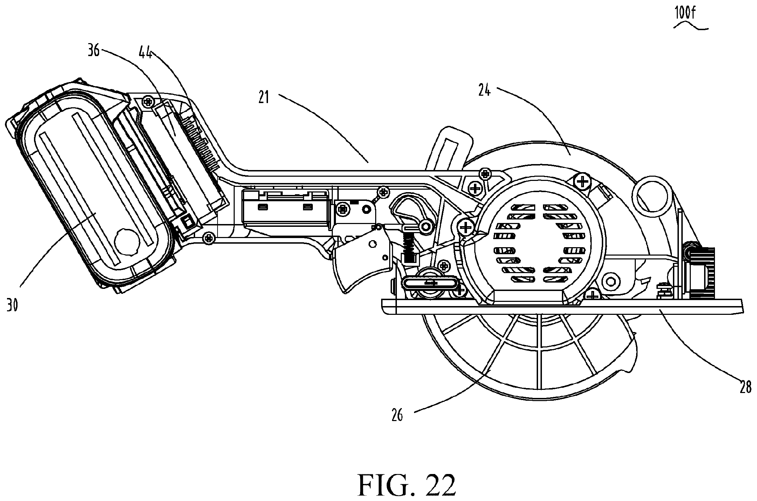

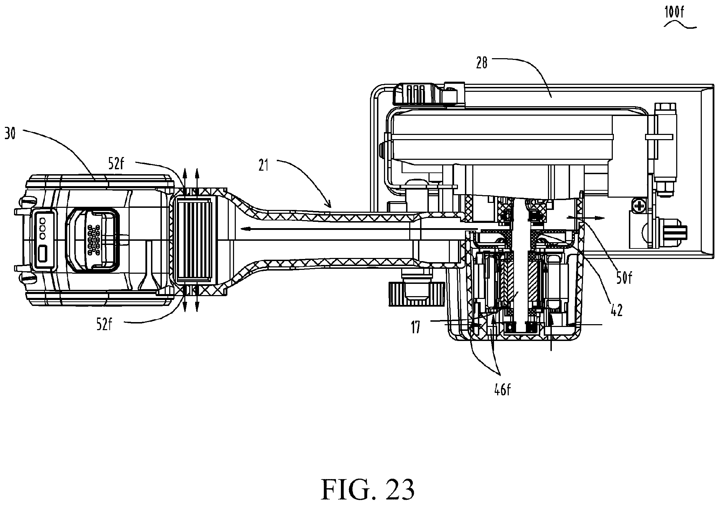

In a possible implementation, the circuit board 36 may also be arranged inside a second end of the first housing 21, close to a power supply device 30, as shown in FIG. 20 to FIG. 25.

FIG. 20 to FIG. 23 show a cutting tool 100f in a seventh implementation of the present invention. The circuit board 36 is arranged inside a second end of a first housing 21. Moreover, the cooling fan 42 is arranged at an end of a motor shaft 17 close to a saw blade 12.

Cooling air holes include a first air inlet 46f, a first air outlet 50f, and a second air outlet 52f The first air inlet 46f is provided on an end portion of a second housing 23 opposite to the saw blade 12. Specifically, first air inlets 46f are arranged on both an end surface of the second housing 23 opposite to the saw blade 12 and an outer peripheral surface of the second housing 23. The first air outlet 50f is provided on the second housing 23, and located at a radially outer side of the fan 42. The second air outlet 52f is provided on a second end of the first housing 21, and arranged close to the circuit board 36.

A third rib plate assembly is also arranged inside the housing 20 for guiding the flow of the cooling airflow inside the housing 20.

In this implementation, how the cutting tool 100f dissipates heat, respective functions of the cooling air holes, and formation of the cooling airflow are roughly described below.

When a motor 16 starts, the cooling fan 42 rotates to drive outside air into the housing 20. Under the guidance of the third rib plate assembly, the cooling airflow includes a first cooling airflow entering the housing 20 from the first air inlet 46f and flowing out of the housing 20 from the first air outlet 50f, and a second cooling airflow entering the housing 20 from the first air inlet 46f and flowing out of the housing 20 from the second air outlet 52f. The first cooling airflow dissipates heat from the motor 16. The second cooling airflow flows through the motor 16 and the circuit board 36 in sequence to dissipate heat from the motor 16 and the circuit board 36.

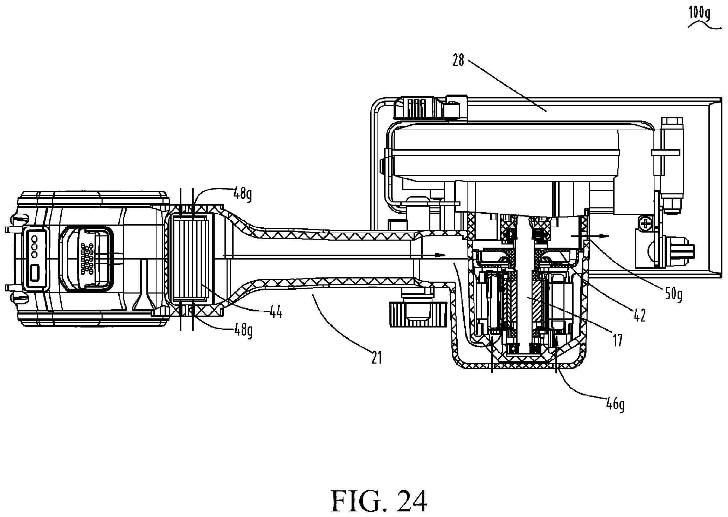

As shown in FIG. 24, the structure of a cutting tool 100g provided in an eighth implementation of the present invention is basically the same as that of the cutting tool 100f provided in the seventh implementation except that the rib plate assembly is arranged differently. Specifically, a fourth rib plate assembly is formed inside the housing 20.

Similar to the seventh implementation, a cooling fan 42 is arranged at an end of a motor shaft 17 close to a saw blade 12. However, because the rib plate assembly is arranged differently, the composition and functions of the cooling air holes change.

Specifically, as shown in FIG. 24, the cooling air holes include a first air inlet 46g, a second air inlet 48g, and a first air outlet 50g. The first air inlet 46g is provided on an end portion of the second housing 23 away from the saw blade 12. The second air inlet 48g is provided on the first housing 21, and arranged close to the circuit board 36. The first air outlet 50g is provided on the second housing 23, and located at a radially outer side of a cooling fan 42.

When a motor 16 starts, the cooling fan 42 rotates to drive outside air into the housing 20. Under the guidance of the fourth rib plate assembly, the cooling airflow includes a first cooling airflow entering the housing 20 from the first air inlet 46g and flowing out of the housing 20 from the first air outlet 50g, and a second cooling airflow entering the housing 20 from the second air inlet 48g and flowing out of the housing 20 from the first air outlet 50g. The first cooling airflow dissipates heat from the motor 16. The second cooling airflow flows through the circuit board 36 and the motor 16 in sequence to dissipate heat from the circuit board 36 and the motor 16.

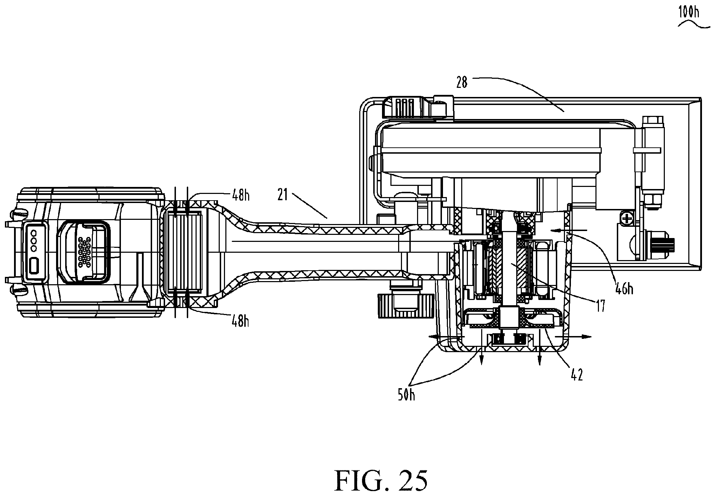

As shown in FIG. 25, the structure of a cutting tool 100h provided in a ninth implementation of the present invention is basically the same as that of the cutting tool 100f provided in the seventh implementation except that the cooling fan 42 is arranged differently.

Referring to FIG. 25, in this implementation, a cooling fan 42 is arranged at an end of a motor shaft 17 away from a saw blade 12. Cooling air holes include a first air inlet 46h, a second air inlet 48h, and a first air outlet 50h. The first air inlet 46h is provided on a second housing 23. The first air inlet 46h is located between a motor 16 and a transmission device along a direction parallel to the motor shaft 17. The second air inlet 48h is provided on the first housing 21, and is arranged close to the circuit board 36. The first air outlet 50h is provided on an end portion of the second housing 23 opposite to the saw blade 12. Specifically, the first air outlets 50h are provided on an end surface and a circumferential surface of the second housing 23.

In this implementation, how the cutting tool 100h dissipates heat, respective functions of the cooling air holes, and formation of the cooling airflow are roughly described below.

When a motor 16 starts, the cooling fan 42 rotates to drive outside air into the housing 20. Under the guidance of the third rib plate assembly, the cooling airflow includes a first cooling airflow entering the housing 20 from the first air inlet 46h and flowing out of the housing 20 from the first air outlet 50h, and a second cooling airflow flowing into the housing 20 from the second air inlet 48h and flowing out of the housing 20 from the first air outlet 50h. The first cooling airflow flows through the motor 16 to dissipate heat from the motor 16. The second cooling airflow flows through the circuit board 36 and the motor 16 in sequence to dissipate heat from the circuit board 36 and the motor 16.

In a possible implementation, the circuit board 36 may also be arranged in the second housing 23. Reference may be made to FIG. 10 to FIG. 12 for a general structure. A space for accommodating the circuit board 36 is directly formed on the second housing 23. The first housing 21 extends along a first axis X from a handle portion. The cooling air holes are appropriately arranged, so that when the motor 16 drives the cooling fan 42 to rotate, the cooling airflow may also flow through the circuit board 36 and the motor 16, to dissipate heat from the circuit board 36 and the motor 16.

In a possible implementation, the circuit board 36 is arranged in the housing 20, and located between the pivot axis X1 and a holding portion 211.

In a possible implementation, the circuit board 36 may be arranged independently of the first housing 21 and the second housing 23. The cooling air holes are appropriately arranged, so that when the motor 16 drives the cooling fan 42 to rotate, the cooling airflow may also flow through the circuit board 36 and the motor 16 to dissipate heat from the circuit board 36 and the motor 16.

The implementations of the present disclosure are described above, and the foregoing descriptions are exemplary but not exhaustive and are not limited to the disclosed implementations. Without departing from the scope and spirit of the described implementations, many modifications and variations are apparent to a person of ordinary skill in the art. The selected terms used herein is intended to best explain the principles of the implementations, practical applications, or improvements of technologies in the market, or to enable another person of ordinary skill in the art to understand the implementations disclosed herein.

## Claims

1. A cutting tool, comprising:
an output shaft, configured to install a saw blade;
a motor, configured to drive the output shaft to rotate, wherein the motor is a brushless motor and comprises a motor shaft;
a fan, driven by the motor shaft, and configured to generate cooling airflow;
a transmission device, arranged between the output shaft and the motor shaft, and configured to transmit the power of the motor to the output shaft, wherein the motor shaft is parallel to the output shaft;
a base plate, provided with a saw blade through hole for the saw blade to pass through;
a housing, comprising a first housing and a second housing, wherein the first housing comprises a first end and a second end, the first end is configured to connect to the second housing, and the second end is configured to connect to a power supply device, the second housing accommodates the motor and the transmission device, and the housing is rotatably connected to the base plate by a pivot axis parallel to the output shaft for adjusting a cutting depth; and
a circuit board, accommodated in the housing, wherein
the first housing is further provided with a handle portion for a user to grasp, and when the user grasps the handle portion to cut, the saw blade is located at a left side of the first housing, and the circuit board and the motor are both arranged in a passage of the cooling airflow when the fan rotates.

2. The cutting tool according to claim 1, wherein the circuit board is arranged inside the first end of the first housing.

3. The cutting tool according to claim 2, wherein the fan is arranged at an end of the motor shaft close to the saw blade; the housing is provided with cooling air holes, and the cooling air holes comprise a first air inlet and a first air outlet; the first air inlet is provided on the second housing, and located at a side of the second housing opposite to the saw blade; the first air outlet is provided on the second housing, and located at a radially outer side of the fan; and when the fan rotates, the cooling airflow comprises a first cooling airflow entering the housing from the first air inlet and then flowing out of the housing from the first air outlet, wherein the first cooling airflow dissipates heat from the motor.

4. The cutting tool according to claim 3, wherein the cooling air holes further comprise a second air inlet, wherein the second air inlet is provided on the first housing, and located between the circuit board and a saw blade plane; a first rib plate assembly is arranged inside the housing; when the fan rotates, under the guidance of the first rib plate assembly, the cooling airflow further comprises a second cooling airflow entering the housing from the second air inlet and then flowing out of the housing from the first air outlet; the second cooling airflow dissipates heat from the circuit board.

5. The cutting tool according to claim 3, wherein the cooling air holes further comprise a second air outlet, wherein the second air outlet is provided on the first housing, and located between the circuit board and a saw blade plane; a second rib plate assembly is arranged inside the housing; when the fan rotates, under the guidance of the second rib plate assembly, the cooling airflow further comprises a second cooling airflow entering the housing from the first air inlet and then flowing out of the housing from the second air outlet; the second cooling airflow flows through the motor and the circuit board in sequence.

6. The cutting tool according to claim 2, wherein the fan is arranged at an end of the motor shaft away from the saw blade; the housing is provided with cooling air holes, and the cooling air holes comprise a first air inlet and a first air outlet; the first air inlet is provided on the first housing, and located between the circuit board and a saw blade plane; the first air outlet is provided on the second housing, and located at a radially outer side of the fan; and a second rib plate assembly is also arranged inside the housing; and when the fan rotates, under the guidance of the second rib plate assembly, the cooling airflow further comprises a first cooling airflow formed in the housing, wherein the first cooling airflow enters the housing from the first air inlet, then flows through the circuit board and the motor in sequence, and finally flows out of the housing from the first air outlet.

7. The cutting tool according to claim 6, wherein the cooling air holes further comprise a second air inlet, the second air inlet is provided on the second housing, and the second air inlet is located between the motor and the transmission device along a direction parallel to the motor shaft; when the fan rotates, under the guidance of the second rib plate assembly, the cooling airflow further comprises a second cooling airflow formed in the housing; the second cooling airflow enters the housing from the second air inlet, flows through the motor, and flows out of the housing from the first air outlet.

8. The cutting tool according to claim 1, wherein the circuit board is arranged inside the second end of the first housing, and the fan is arranged at an end of the motor shaft close to the saw blade; the cooling air holes comprise a first air inlet, a first air outlet, and a second air outlet; the first air inlet is provided on an end portion of the second housing away from the saw blade; the first air outlet is provided on the second housing, and located at a radially outer side of the fan; and the second air outlet is provided on the first housing, and is arranged close to the circuit board.

9. The cutting tool according to claim 1, wherein the circuit board is arranged between the pivot axis and the handle portion.

10. The cutting tool according to claim 1, wherein a radial circumference of the handle portion is in a range of 130 mm to 150 mm.

11. The cutting tool according to claim 1, wherein the first housing extends along a first axis, and the first axis is perpendicular to an axis of the motor shaft.

12. The cutting tool according to claim 1, wherein the transmission device uses one-stage transmission, and comprises a driving gear supported on the motor shaft and a driven gear supported on the output shaft; and a transmission ratio of the one-stage transmission is in a range of 2 to 6.5, and a quantity of teeth of the driven gear is in a range of 12 to 35.

13. The cutting tool according to claim 12, wherein a diameter of the saw blade installed to the output shaft is in a range of 110 mm to 130 mm, the cutting depth of the cutting tool is not less than 38 mm.

14. The cutting tool according to claim 1, wherein a depth setting rail is arranged on the base plate, a circle center of the depth setting rail is located on the pivot axis, and the depth setting rail and the saw blade are respectively located at both sides of the first housing.

15. A cutting tool, comprising:
an output shaft, configured to install a saw blade;
a motor, configured to drive the output shaft to rotate, wherein the motor is a brushless motor and comprises a motor shaft;
a transmission device, arranged between the output shaft and the motor shaft, and configured to transmit the power of the motor to the output shaft, wherein the motor shaft is parallel to the output shaft;
a base plate, provided with a saw blade through hole for the saw blade to pass through; and
a housing, comprising a first housing and a second housing, wherein the first housing comprises a first end and a second end, the first end is configured to connect to the second housing, and the second end is configured to connect to a power supply device, and the second housing accommodates the motor and the transmission device, wherein
the first housing is further provided with a handle portion for a user to grasp, and when the user grasps the handle portion to cut, the saw blade is located at a left side of the first housing.
